# EUROPÄISCHE PATENTSCHRIFT

(11) **EP 4 279 676 B1**
(45) Veröffentlichungstag und Bekanntmachung des Hinweises auf die Patenterteilung: **02.07.2025**
(21) Anmeldenummer: 23174661.1
(22) Anmeldetag: 22.05.2023
(51) Int. Cl.: E03F 3/04

(54) **ANSCHLUSSVORRICHTUNG MIT VERBESSERTER DICHTWIRKUNG BEI INNEN BESCHÄDIGTEM HAUPTROHR**
CONNECTION DEVICE WITH IMPROVED SEALING EFFECT IN THE INTERIOR OF A DAMAGED MAIN PIPE
DISPOSITIF DE RACCORDEMENT À ÉTANCHÉITÉ AMÉLIORÉE SUR UN TUBE PRINCIPAL ENDOMMAGÉ À L'INTÉRIEUR

(30) Priorität: 20.05.2022 DE 202022102825 U
(43) Veröffentlichungstag der Anmeldung: 22.11.2023
(73) Patentinhaber: Funke Kunststoffe GmbH, 59071 Hamm-Uentrop (DE)
(72) Erfinder: Funke, Hans-Günter, 48324 Sendenhorst (DE); Funke, Norbert, 48324 Sendenhorst (DE)
(74) Vertreter: Patentanwälte Olbricht Buchhold Keulertz

(56) Entgegenhaltungen:
- EP-A1- 3 680 537
- DE-A1- 19 756 025
- DE-U1- 20 108 823

## Beschreibung

Die Erfindung betrifft eine Anschlussvorrichtung nach den Merkmalen im Oberbegriff des Anspruchs 1.

Für einen dauerhaft dichten Anschluss von Seitenrohren an Hauptrohre unterschiedlicher Wandstärken sind Anschlussvorrichtungen bekannt zur Schaffung eines Abzweigs bzw. einer Anschlussanordnung, damit beispielsweise bei der Erschließung neuer Baugebiete der Anschluss von Hausleitungen an eine bestehende Kanalisation erfolgen kann. Beispielsweise ist aus der EP 3 680 537 A1 eine Anschlussvorrichtung mit Kippgelenk bekannt, und aus der DE 197 56 025 A1 und DE 201 08 823 U1 sind jeweils verschraubbare Abzweige für dünnwandige Kanalrohre bekannt. Anschlussbohrungen im Hauptrohr, in welche die Anschlussvorrichtungen einsetzt werden, gehen regelmäßig mit einer Beschädigung der Rohrwandungen einher.

Bei Hauptrohren, die an ihrer inneren Rohroberfläche beschädigt sind, ist die Abdichtung des Abzweigs problematisch. Beispielsweise kann das Problem bestehen, dass je nach Ausdehnung der Beschädigung die gewünschte Dichtwirkung eines Kragens der Anschlussvorrichtung, welcher beispielsweise durch eine Umformung eines Grundkörpers geschaffen ist und welcher der inneren Rohroberfläche, insbesondere der Auskleidung des Hauptrohrs abdichtend anliegen soll, aufgrund der Beschädigung nicht gewährleistet werden kann.

Aus dem DE 20 2017 101 503 U1 ist eine verschraubbare Anschlussvorrichtung für ein Unebenheiten aufweisendes Kanalrohr bekannt. Gelehrt wird eine Anschlussvorrichtung mit einer einem Kragen aufliegenden Dichtung, aufweisend einen hervortretenden Dichtungsabschnitt zur Anlage an die innere Oberfläche des Hauptrohrs. Weiterhin ist ein Distanzring mit Dichtung vorgesehen, welcher zusammen mit der Kragendichtung einerseits und mit einem als Rohrabschnitt ausgestalteten Grundkörper der Anschlussvorrichtung andererseits einen Aufnahmeraum schafft, welcher befüllbar ist mit einem fließfähigen Dichtmittel. Dadurch soll eine besonders wirksame Abdichtung erzielt werden.

Erfahrungen aus der Praxis weisen jedoch auf teilweise fehlerhafte Abdichtungen hin. Problematisch können beispielsweise Gussrohre sein, die das Hauptrohr darstellen und innen mit einer Auskleidung in Form einer (Zement-)Mörtelschicht oder dergleichen versehen sind. Wenn die Anschlussbohrung in das Gussrohr eingebracht wird, die für den Anschluss eines Seitenrohrs erforderlich ist, kann es zu Beschädigungen kommen, in der Art, dass sich die Mörtelauskleidung bereichsweise vollständig löst, so dass nur die Gusswand des Hauptrohrs bestehen bleibt, oder es können (vereinzelte) Ausbrüche oder Abplatzungen der Mörtelschicht auftreten. Die Beschädigungen können so großflächig sein, dass sie sich über den Durchmesser des oben erwähnten Kragens hinweg erstrecken und dementsprechend der Kragen nicht die gewünschte Dichtwirkung erbringen kann. Insbesondere bei Verwendung von Anschlusssystemen, für welche neben der Anschlussbohrung weitere Bohrungen für Befestigungsmittel oder Ähnlichem erforderlich sind, ist eine deutlich gesteigerte Gefahr von großflächigen Beschädigungen in Bohrungsnähe in der Auskleidung des Hauptrohrs festzustellen. Ein eingefülltes, flüssiges Dichtmittel kann daher den Kragen hinterwandern und aus dem Abzweig in das Hauptrohr gelangen, so dass es im Bereich des Abzweigs fehlt, wodurch dort die gewünschte Abdichtung zwischen Seitenrohr und Hauptrohr eingeschränkt sein kann.

Der vorliegenden Erfindung liegt die Aufgabe zugrunde, die bekannten Abzweige dahingehend zu verbessern, dass auch bei großflächigen Beschädigungen der inneren Oberfläche des Hauptrohrs eine hinreichende Abdichtung erzielt werden kann.

Gelöst wird die Aufgabe durch eine Anschlussvorrichtung nach den Merkmalen des Anspruchs 1, durch eine Anschlussanordnung nach den Merkmalen des Anspruchs 10 und durch ein Verfahren nach den Merkmalen des Anspruchs 12. Merkmale der Erfindung werden nachfolgend erörtert, wobei vorteilhafte Ausgestaltungen der Erfindung unter anderem in den Unteransprüchen beschrieben werden.

Die Erfindung schlägt mit anderen Worten vor, den Aufnahmeraum mittels einer umlaufenden, vorderen Dichtlippe zu begrenzen schaffend einen ersten Teilraum, welcher vorschlagsgemäß volumenmäßig kleiner ist als der aus der Praxis bekannte Aufnahmeraum und welcher vorteilhaft begrenzt ist durch klar definierte Oberflächen der raumumfassenden Elemente, wobei die Elemente im Allgemeinen frei sind von etwaigen Beschädigungen oder dergleichen. Vorgesehen ist, dass das Dichtmittel in den ersten Teilraum eingebracht wird, und zwar durch einen vorschlagsgemäßen Injektionskanal. Vorzugsweise unterteilt die vordere Dichtlippe den Aufnahmeraum in einen ersten und einen zweiten Teilraum, wobei nur der zweite Teilraum gegebenenfalls angrenzt an die innere Oberfläche des Hauptrohrs und somit an die etwaigen Beschädigungen der Hauptrohrauskleidung.

Der Erfindung liegt die Überlegung zugrunde, dass das Dichtmittel bevorzugt nicht bis zum Kragen gelangt, welcher der Innenseite des Hauptrohrs anliegt, und zwar gegebenenfalls nicht ausreichend dicht anliegt. Leichte Mörtelabplatzungen an der Bohrungskante werden jedoch mittels Dichtung am Kragen abgedeckt. Erfindungswesentlich ist somit eine vordere an der Dichtung der Anschlussvorrichtung vorgesehene Dichtlippe, welche sich im Wesentlichen in radialer Richtung nach Außen erstreckt und welche vorteilhaft eine Raumabtrennung des Aufnahmeraums bewirkt, zumindest eine Verkleinerung des Aufnahmeraumvolumens.

Da die Dichtwirkung mittels der vorschlagsgemäßen, vorderen Dichtlippe beim Einfüllen des flüssigen Dichtmittels in Fließrichtung vor dem Kragen liegt, wird die Größe des Aufnahmeraums und somit die Menge des einzufüllenden flüssigen Dichtmittels verringert, was aus ökologischen Gründen, aber auch in ökonomischer Hinsicht vorteilhaft ist.

Weiterhin kann durch die vorschlagsgemäße Anschlussvorrichtung die Herstellung eines Abzweigs vereinfacht werden. Durch die Anschlussbohrung im Hauptrohr wird eine Schnittkante geschaffen, welche gegebenenfalls einer erhöhten Korrosion unterliegen kann, insbesondere im Falle eines Gussrohres. In der Praxis wird die Schnittkante daher vor der Montage einer Anschlussvorrichtung mit einer Rostschutzgrundierung behandelt. Die hohe Abdichtungsleistung der vorgeschlagenen Anschlussvorrichtung ermöglicht es, grundsätzlich auf eine derartige Korrosionsschutzbehandlung ressourcensparend verzichten zu können. Das luftdicht abschließende Dichtmittel verhindert das Eindringen korrosionsfördernder Medien. Zusätzlich kann das Dichtmittel korrosionshemmende Wirkstoffe aufweisen.

Die Dichtung erstreckt sich vorschlagsgemäß von dem Kragen in Richtung des zweiten Endes, und zwar vorteilhaft derart, dass entlang des Grundkörpers ein axialer Abschnitt der Dichtung geschaffen wird. Für eine besonders vorteilhafte Weiterentwicklung kann vorgesehen sein, dass die vordere Dichtlippe in dem axialen Abschnitt angeordnet ist. Für eine alternative Ausgestaltung kann vorgesehen sein, dass die Dichtung im Wesentlich zirkumferent um den Grundkörper verläuft, ohne sich von dem Kragen ausgehend in Richtung zu dem zweiten Ende erstrecken zu müssen.

In einer Ausgestaltung kann die am Kragen befindliche Dichtung einen der Auskleidung des Hauptrohrs anlegbaren Dichtbereich aufweisen, welcher sich in Richtung zum zweiten Ende erstreckt. Für eine besonders vorteilhafte Weiterentwicklung kann der anlegbare Dichtbereich als hintere Dichtlippe ausgestaltet sein. Durch diese Maßnahme wird für den Dichtbereich eine Höhe und Kontur vorgeschlagen, die besonders flexibel ist und dazu geeignet ist, den Konturen auch ausgeprägter Beschädigungen in der Auskleidung des Hauptrohres, welche über den äußeren Durchmesser des Kragens hinausragen, zu folgen bzw. diesen angelegt zu werden.

Eine kombinierte Anordnung von vorderer und hinterer Dichtlippe ist besonders vorteilhaft. Überraschenderweise hat sich gezeigt, dass dadurch drei Abdichtungsebenen geschaffen werden können, mit welchen sich zusammenwirkend eine ausgesprochen hohe Abdichtung erzielen lässt. Die erste Abdichtungsebene betrifft den ersten Teilraum. Die vordere Dichtlippe bewirkt, dass aufgrund des geringeren Widerstands zunächst der erste Teilraum mit Dichtmittel gefüllt wird, das heißt der im Wesentlichen den Grundkörper umgebende erste Teilraum, wobei die weitestgehend beschädigungsfreien Oberflächen für eine homogene Verteilung des Dichtmittels im ersten Teilraum zuträglich sind. Bereits die erste Abdichtungsebene stellt eine wirkungsvolle Abdichtung für den Abzweig dar. Die zweite Abdichtungsebene betrifft den zweiten Teilraum. Vorzugsweise erst bei zunehmenden Druckverhältnissen, nachdem der erste Teilraum vollständig gefüllt ist, wird in Verbindung mit einem zumindest zeitweise höheren Einpressdruck zusätzliches Dichtmittel in den zweiten Teilraum gepresst, und zwar an der vorderen Dichtlippe vorbei, welcher im Wesentlichen durch die vordere und die hintere Dichtlippe abgegrenzt wird. Dieser Dichtmittelaustritt aus dem ersten Teilraum stellt jedoch keineswegs einen Verlust dar. Stattdessen fördert die hintere Dichtlippe, welche den Konturen der Beschädigungen in der Auskleidung des Hauptrohrs weitestgehend anliegt, eine vollumfängliche Verteilung des Dichtmittels im zweiten Teilraum. Nunmehr kann ein darüberhinausgehender Druckanstieg einen Dichtmittelaustritt aus dem zweiten Teilraum bedingen, und zwar zunächst dort, wo die hintere Dichtlippe den Beschädigungskonturen nicht weitestgehend anliegen kann. Der zusätzlichen Verfüllung der Beschädigungen liegt die dritte Abdichtungsebene zugrunde. Insgesamt unterstützen die Dichtlippen somit eine gleichmäßige, zirkumferente Ausbreitung des im Allgemeinen hochviskosen Dichtmittels im Aufnahmeraum mit dem Effekt einer hohen Abzweigabdichtung.

Weiterhin ist eine Kombination aus vorderer und hinterer Dichtlippe besonders vorteilhaft, als dass die hohe Abdichtung die Schnittkante der Anschlussbohrung hermetisch umschließt, sodass eine ressourcenintensive Korrosionsschutzbehandlung unterbleiben kann.

In einer Ausgestaltung mit vorderer und hinterer Dichtlippe kann die Dichtung vorteilhaft im Wesentlichen C-förmig ausgebildet sein. Eine derartige elastische Dichtung kann auf einfache Weise hergestellt werden, wobei unmittelbar Anlagekonturen vorgesehen sein können, welche die Anlage der Dichtung an den Elementen der Anschlussvorrichtung erleichtern, beispielsweise eine bereichsweise rechteckige Ausgestaltung.

Des Weiteren können unterschiedliche Schenkellängen der Dichtung vorgesehen sein, wobei der obere Schenkel als vordere Dichtlippe und der untere Schenkel als hintere Dichtlippe enden. In Einzelfällen kann es erforderlich sein, einen jeweiligen Schenkel bzw. eine jeweilige Dichtlippe für konkrete Bausituation anzupassen. Zum einen kann ein vergleichsweise langer, oberer Schenkel vorteilhaft sein, sofern die Anschlussbohrung vergleichsweise groß ist, so dass der Abstand zwischen Laibung der Anschlussbohrung und Grundkörper vergleichsweise groß ist. Eine im Durchmesser größere Anschlussbohrung erleichtert bei der Montage das Einführen des ersten Endes in das Hauptrohr. Zum zweiten kann ein vergleichsweise langer, unterer Schenkel vorteilhaft sein, sofern Beschädigungen in der Auskleidung des Hauptrohrs besonders ausgeprägt sind, insbesondere im Falle der vollständigen Ablösung der Auskleidung vom Hauptrohr.

In einer Weiterentwicklung kann ein Kontrollkanal im Distanzring vorgesehen sein, welcher in den Aufnahmeraum mündet. Der Kontrollkanal dient dazu, einem Handhabenden zu signalisieren, dass der Aufnahmeraum weitestgehend gefüllt ist. Durch den Injektionskanal wird Dichtmittel in den ersten Teilraum eingebracht bis ein Dichtmittelaustritt am Kontrollkanal wahrzunehmen ist, so dass von einer vollständigen Füllung zumindest des ersten Teilraums auszugehen ist.

Vorzugsweise kann der Kontrollkanal im Distanzring gegenüberliegend vom Injektionskanal angeordnet sein und kann dabei in axialer Richtung des Grundkörpers weiter entfernt vom zweiten Ende sein als der Injektionskanals. Der vorgeschlagenen Anordnung von Injektions- zu Kontrollkanal liegt die Überlegung zugrunde, die beiden Kanäle voneinander maximal zu beabstanden. Dadurch soll das Risiko einer fehlerhaften Füllstandsanzeige vermindert werden, denn bevor Dichtmittel überhaupt aus dem Kontrollkanal austreten kann, muss dieses zumindest um den halben Umfang des Grundkörpers in den ersten Teilraum eingepresst werden.

Alternativ oder zusätzlich zu den zuvor genannten Kontrollmitteln kann für eine besonders erfinderischere Ausgestaltung vorgesehen sein, dass der durchströmungswirksame Querschnitt des Kontrollkanals kleiner ist als der des Injektionskanals. Ein kleinerer Querschnitt setzt einen höheren Einpressdruck voraus, um Dichtmittel über den Kontrollkanal aus den Aufnahmeraum austreten zu lassen. Infolgedessen wird insbesondere bei gleichbleibenden Einpressdrücken zunächst eine homogene Verteilung des Dichtmittels im Aufnahmeraum gefördert, bevor das Dichtmittel letztendlich austritt. Alternativ oder zusätzlich zum kleineren Querschnitt kann der Kontrollkanal vorteilhafter Weise eine drucksensitive Barriere im Strömungsquerschnitt aufweisen, welche ein Dichtmittel passieren lässt, sobald eine Druckschwelle überschritten wird. Die Barriere kann beispielsweise bevorzugt eine entsprechende Porenstruktur aufweisen, welche Dichtmittel im Wesentlichen jenseits einer Druckschwelle passieren lässt. Ebenso kann vorgesehen sein, dass die Barriere nach Überschreiten einer Druckschwelle, das heißt bei einem konkreten Druck, durch das Dichtmittel mechanisch zerstört wird, so dass das Dichtmittel durch den Kontrollkanal austreten kann.

Weiterhin schlägt die Erfindung eine als Abzweig bezeichnete Anschlussanordnung vor. Die gewünschte Funktion der vorderen Dichtlippe kann insbesondere dann gewährleistet werden, wenn das Material des Hauptrohrs in dem Bereich, wo die Laibung der Anschlussbohrung verläuft, frei von Lunkern oder ähnlichen Fehlstellen ist. Dementsprechend eignet sich der vorschlagsgemäße Anschluss insbesondere für Hauptrohre, die als Gussrohre ausgestaltet sind, also als gegossene metallische Rohre, beispielsweise aus Gusseisen, aber auch für Hauptrohre aus mineralischen, beispielsweise keramischen Werkstoffen. Bei Hauptrohren aus einem Betonwerkstoff, wo die Möglichkeit von Fehlstellen in der Laibung der Anschlussbohrung vergleichsweise größer ist, ist erfahrungsgemäß die Gefahr von Abplatzern oder ähnlichen Beschädigungen der inneren Rohroberfläche geringer, so dass dort der Kragen des Abzweigs die gewünschte abdichtende Wirkung bereitstellen kann.

Die vorschlagsgemäße Ausgestaltung kann standardmäßig bei gattungsgemäßen Abzweigen verwirklicht sein, um auf diese Weise zu verhindern, dass nach Freilegung des Hauptrohrs, welches typischerweise im Erdreich verläuft, nicht erst aufgrund der festgestellten Materialbeschaffenheit des Hauptrohrs der dazu passende, jeweils geeignete Abzweig bereitgestellt zu werden braucht. Für Hauptrohre, die mittels des Kragens der Anschlussvorrichtung grundsätzlich ausreichend gut abgedichtet werden können, stellt die vorschlagsgemäß vorgesehen, vordere Dichtlippe, die der Laibung der Anschlussbohrung anliegt, eine zusätzliche, ggf. nicht erforderliche Dichtungsmaßnahme dar und verbessert auf diese Weise die Sicherheit der angestrebten Abdichtung des das flüssige Dichtmittel aufnehmenden Aufnahmeraums.

Vorschlagsgemäß wird eine zuverlässige Abdichtung mit einer zusätzlichen Dichtlippe erreicht, die innerhalb der Laibung der Anschlussbohrung den Grundkörper umläuft und der Laibung abdichtend anliegt, insbesondere formschlüssig der Laibung anliegt. Im Vergleich zur inneren Rohroberfläche des Hauptrohrs stellt die Laibung der Anschlussbohrung eine definierte Oberfläche bereit, so dass der Aufnahmeraum, der zur Aufnahme des erwähnten flüssigen Dichtmittels zur Verfügung steht, durch diese zusätzliche Dichtlippe begrenzt wird zur Schaffung des ersten Teilraums. Dementsprechend gelangt das Dichtmittel nicht bis zum Kragen, welcher der Innenseite des Hauptrohrs anliegt, und zwar ggf. nicht ausreichend dicht anliegt. Leichte Mörtelabplatzungen an der Bohrungskante werden jedoch mittels Dichtung am Kragen abgedeckt.

Besonders vorteilhaft kann in der Anschlussbohrung eine Anschlussvorrichtung angeordnet sein zur Herstellung des Abzweigs, welche ein oder mehrere der zuvor erläuterten Merkmale aufweist.

### Ausführungsbeispiel

Ein Ausführungsbeispiel der Erfindung wird anhand der rein schematischen Darstellungen nachfolgend näher erläutert, wobei einzelne Merkmale oder eine Kombination von Merkmalen des dargestellten Ausführungsbeispiels auch unabhängig von der übrigen Ausgestaltung des Ausführungsbeispiels bei einer vorschlagsgemäßen Anschlussvorrichtung verwirklicht sein können. Dabei zeigt
- Fig. 1: einen Abzweig im Querschnitt mit einer vergrößerten Detaildarstellung einer beispielhaften Anschlussvorrichtung,
- Fig. 2: eine perspektivische Ansicht von schräg oben auf die Montage der Anschlussvorrichtung aus Fig. 1, und
- Fig. 3: einen Querschnitt durch Elemente der Anschlussvorrichtung aus Fig. 1 und 2.

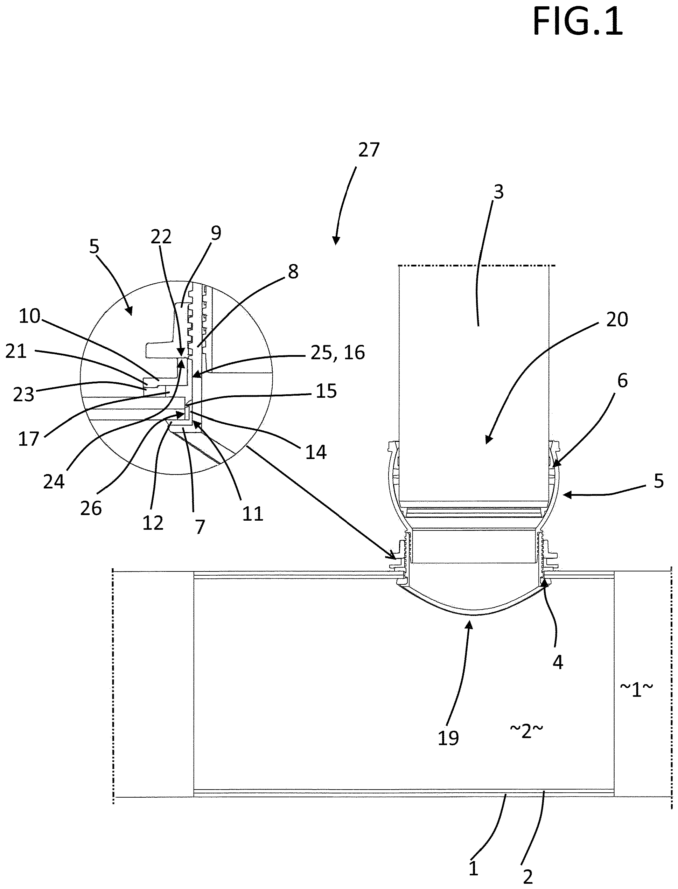

Ein Ausführungsbeispiel einer Anschlussanordnung 27 ist in Fig. 1 dargestellt. Ein Hauptrohr 1 ist zur Veranschaulichung teilweise aufgeschnitten dargestellt, so dass eine Auskleidung 2 erkennbar ist, mit welcher die innere Oberfläche des Hauptrohrs 1 bedeckt ist bzw. welche die innere Oberfläche des Hauptrohrs 1 bildet. Bei dem dargestellten Ausführungsbeispiel handelt es sich um ein Hauptrohr 1 aus Gusseisen, welches eine Auskleidung 2 in Form einer Mörtelschicht aufweist. An das Hauptrohr 1 schließt ein Seitenrohr 3 aus Kunststoff an hierzu ist eine Anschlussbohrung 4 in das Hauptrohr 1 eingebracht worden. Ein mediendichter Anschluss des Seitenrohrs 3 an das Hauptrohr 1 wird durch eine beispielhafte Anschlussvorrichtung 5 gewährleistet, die das Seitenrohr 3 winkeltolerant mittels eines Anschlussabschnitts 6 im zweiten Ende 20 der Anschlussvorrichtung 5 aufnimmt, der in der Praxis auch als "Kugeladapter" bezeichnet wird. Dem zweiten Ende gegenüberliegend weist die Anschlussvorrichtung 5 das erste Ende 19 auf.

Wie die lupenartige Ausschnittsvergrößerung in Fig. 1 zeigt, weist die Anschlussvorrichtung 5 einen Kragen 7 auf, der an einen Grundkörper 8 der Anschlussvorrichtung 5 angeformt ist und der Auskleidung 2 im Inneren des Hauptrohrs 1 anliegt. In dem Ausführungsbeispiel weist die Auskleidung in diesem Anlagebereich aus Darstellungsgründen keine Beschädigungen auf. Aus der Praxis allerdings ist bekannt, dass durch die Einbringung der Anschlussbohrung 4 deutliche Beschädigungen der Auskleidung 2 zu erwarten sind. Mittels eines Spannrings 9, der über Gewinde mit dem Grundkörper 8 zusammenwirkt, kann der Kragen 7 von innen an die Auskleidung 2 angepresst werden, wobei ein Distanzring 10 mit Flanschfläche 21 als Zwischenelement die Abstützung des Spannrings 9 an der gewölbten äußeren Oberfläche des Hauptrohrs 1 gewährleistet. Der Spannring 9 weist eine Spannfläche 24 auf, über welche die Spannkraft auf eine Druckfläche 22 des Distanzrings 10 übertragen wird. Auf der zum ersten Ende 19 hinweisenden Seite der Flanschfläche 21 ist eine den ersten Teilraums 25 begrenzende Außendichtung 23 angeordnet.

Der Kragen 7 liegt der Auskleidung 2 nicht unmittelbar an. Vielmehr ist eine ringförmige Dichtung 11 zwischen dem Grundkörper 8 und dem Kragen 7 einerseits sowie dem Hauptrohr 1 andererseits vorgesehen. Insbesondere in der vorliegenden Anschlussanordnung 27 weist die Dichtung 11 einen annähernd L-förmigen Querschnitt auf und erstreckt sich mit einem flachen, radialen Abschnitt 12 in radialer Richtung zwischen dem Kragen 7 und der Auskleidung 2 des Hauptrohrs 1. Mit einem rohrförmigen, axialen Abschnitt 14 erstreckt sich die Dichtung 11 in axialer Richtung zwischen dem Grundkörper 8 und dem Hauptrohr 1.

In diesem axialen Abschnitt 14 weist die Dichtung 11 eine zusätzliche, vordere Dichtlippe 15 auf, die der Laibung der Anschlussbohrung 4 im Hauptrohr 1 anliegt und somit in radialer Richtung abdichtend wirkt. Bei dem dargestellten Ausführungsbeispiel befindet sich die vordere Dichtlippe 15 in einem Abstand über dem Kragen 7. Die vordere Dichtlippe 15 teilt den Aufnahmeraum 16 in einen ersten und einen zweiten Teilraum 25, 26, wobei das flüssige Dichtmittel 17 nur in den ersten Teilraum eingefüllt ist.

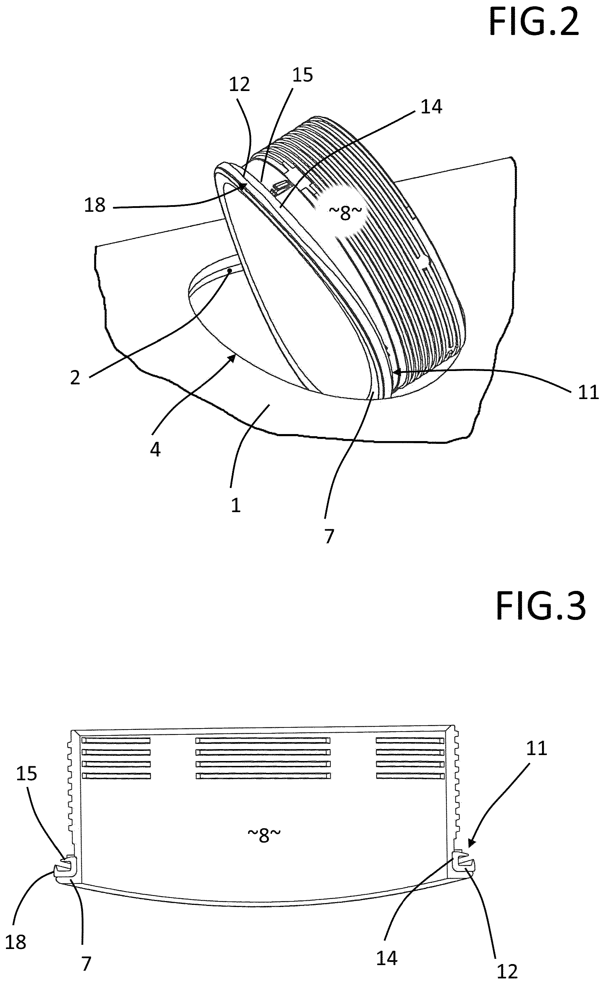

Eine perspektivische Ansicht von schräg oben auf die Montage der Anschlussvorrichtung 5 aus Fig. 1 zeigt Fig. 2. Zu sehen ist der Grundkörper 8 mitsamt dem daran angeformten Kragen 7 und der auf den Kragen 7 aufgelegten Dichtung 11 während der Montage, wobei der Grundkörper 8 bereits teilweise durch die Anschlussbohrung 4 in das Hauptrohr 1 eingeführt ist. Es ist ersichtlich, dass die Dichtung 11 am radial äußeren, umlaufenden Ende ihres radialen Abschnitts 12 eine sogenannte hintere Dichtlippe 18 aufweist, die unter anderem für das im Hauptrohr 1 geführte Medium eine erste Barriere schafft und sich von dem radialen Abschnitt 12 aus in axialer Richtung erstreckt. Die wellenförmige Ausgestaltung des Kragens 7 samt Dichtung 11 dient der formschlüssigen Anlage der hinteren Dichtlippe 18 an der Auskleidung 2 des Hauptrohrs 1.

Fig. 3 zeigt den Grundkörper 8 der Anschlussvorrichtung 5 aus Fig. 1 und 2. mit angeformtem Kragen 7 umlaufender Dichtung 11. Der radiale und der axiale Abschnitt 12, 14 der Dichtung 11 sind rechtwinkelig zueinander ausgerichtet, sodass der radiale Abschnitt 12 dem Kragen 7 aufliegt und der axiale Abschnitt 14 dem Grundkörper 8 anliegt. Jeweils endständig ist an dem axialen Abschnitt 14 eine vordere Dichtlippe 15 angeordnet und an dem radialen Abschnitt 12 eine hintere Dichtlippe 18, wobei sich die vordere Dichtlippe 15 in radialer Richtung, im Wesentlichen parallel zum Kragen 7 und die hintere Dichtlippe 18 in axialer Richtung, im Wesentlichen parallel zum Grundkörper 8 erstreckt.

Insgesamt weist die Dichtung 11 dadurch eine im Wesentlichen C-förmige Gestalt auf.

### Bezugszeichen:

- 1: Hauptrohr
- 2: Auskleidung
- 3: Seitenrohr
- 4: Anschlussbohrung
- 5: Anschlussvorrichtung
- 6: Anschlussabschnitt
- 7: Kragen
- 8: Grundkörper
- 9: Spannring
- 10: Distanzring
- 11: Dichtung
- 12: Radialer Abschnitt
- 14: Axialer Abschnitt
- 15: Vordere Dichtlippe
- 16: Aufnahmeraum
- 17: Dichtmittel
- 18: hintere Dichtlippe
- 19: Erstes Ende
- 20: Zweites Ende
- 21: Flanschfläche
- 22: Druckfläche
- 23: Außendichtung
- 24: Spannfläche
- 25: Erster Teilraum
- 26: Zweiter Teilraum
- 27: Anschlussanordnung

## Patentansprüche

1. Anschlussvorrichtung (5) zur Verbindung eines mit einer Anschlussbohrung (4) versehenen Hauptrohrs (1) mit einem Seitenrohr (3),
• mit einem ersten, durch die Anschlussbohrung (4) in das Hauptrohr (1) einführbaren Ende (19),
wobei die Anschlussvorrichtung (5) im Bereich ihres ersten Endes (19) einen dem Hauptrohr (1) von innen anlegbaren, sich radial nach außen erstreckenden Kragen (7) aufweist,
• mit einem zweiten, an das Seitenrohr (3) anschließbaren Ende (20),
wobei die Anschlussvorrichtung (5) im Bereich ihres zweiten Endes (20) einen Anschlussabschnitt (6) aufweist, der an das Seitenrohr (3) anschließbar ausgestaltet ist,
• mit einem als Rohrabschnitt ausgestalteten Grundkörper (8),
• mit einer elastischen Dichtung (11) auf dem Kragen (7), welche sich vom Kragen (7) in Richtung zum zweiten Ende (20) erstreckt,
• mit einem den Grundkörper (8) außerhalb des Hauptrohrs (1) umgebenden Distanzring (10),
wobei der Distanzring (10) in Richtung zum ersten Ende (19) weisend eine wellenförmig verlaufende, der Außenseite des Hauptrohrs (1) folgende Flanschfläche (21) aufweist, sowie in Richtung zum zweiten Ende (20) weisend eine quer zum Grundkörper (8) verlaufende Druckfläche (22),
und wobei der Distanzring (10) derart geformt ist, dass zwischen dem Distanzring (10) einerseits und dem Grundkörper (8) sowie dem Hauptrohr (1) andererseits ein mit einem fließfähigen Dichtmittel (17) befüllbarer Aufnahmeraum (16) geschaffen wird, welcher an den Grundkörper (8) und das Hauptrohr (1) angrenzt,
und wobei auf der zum ersten Ende (19) hinweisenden Seite der Flanschfläche (21) eine den Aufnahmeraum (16) begrenzende Außendichtung (23) angeordnet ist,
• und mit einem Spannring (9),
wobei der Spannring (9) den Grundkörper (8) umgibt und mit diesem verschraubbar ist, und welcher in Richtung zum ersten Ende (19) weisend eine an die Druckfläche (22) des Distanzrings (10) anlegbare Spannfläche (24) aufweist,
**dadurch gekennzeichnet,**
**dass** die Dichtung (11) eine umlaufende, vordere Dichtlippe (15) aufweist, welche sich im Wesentlichen in radialer Richtung nach Außen erstreckt,
und **dass** die vordere Dichtlippe (15) den Aufnahmeraum (16) begrenzt, schaffend einen ersten Teilraum (25), welcher an den Distanzring (10) angrenzt,
und **dass** der Distanzring (10) einen Injektionskanal aufweist, welcher in den ersten Teilraum (25) mündet.

2. Anschlussvorrichtung (5) nach Anspruch 1,
**dadurch gekennzeichnet,**
**dass** die Dichtung (11) entlang des Grundkörpers (8) einen axialen Abschnitt (14) aufweist,
und **dass** die vordere Dichtlippe (15) in dem axialen Abschnitt (14) angeordnet ist.

3. Anschlussvorrichtung (5) nach Anspruch 1 oder 2,
**dadurch gekennzeichnet,**
**dass** die am Kragen (7) befindliche Dichtung (11) einen der Auskleidung (2) des Hauptrohrs (1) anlegbaren Dichtbereich aufweist, welcher sich in Richtung zum zweiten Ende (20) erstreckt.

4. Anschlussvorrichtung (5) nach Anspruch 3,
**dadurch gekennzeichnet,**
**dass** der Dichtbereich als hintere Dichtlippe (18) ausgestaltet ist.

5. Anschlussvorrichtung (5) nach Anspruch 4,
**dadurch gekennzeichnet,**
**dass** die vordere und die hintere Dichtlippe (15, 18) einen zweiten Teilraum (26) begrenzen, wobei eine Füllung mit Dichtmittel (17) des ersten Teilraums (25) eine erste Abdichtungsebene schafft und eine Füllung des zweiten Teilraums (26) eine zweite Abdichtungsebene, wobei das Dichtmittel mittels vorderer und hinterer Dichtlippe (15, 18) um den Grundkörper (8) jeweils zirkumferent geführt ist.

6. Anschlussvorrichtung (5) nach Anspruch 4 oder 5,
**dadurch gekennzeichnet,**
**dass** die Dichtung (11) im Wesentlichen C-förmig ausgebildet ist.

7. Anschlussvorrichtung (5) nach einem der vorhergehenden Ansprüche,
**dadurch gekennzeichnet,**
**dass** der Distanzring (10) einen weiteren Kontrollkanal aufweist, der im Aufnahmeraum (16) mündet.

8. Anschlussvorrichtung (5) nach Anspruch 7,
**dadurch gekennzeichnet,**
**dass** der Kontrollkanal im Distanzring (10) gegenüberliegend vom Injektionskanal angeordnet ist und in axialer Richtung des Grundkörpers (8) weiter entfernt vom zweiten Ende (20) ist als der Injektionskanal.

9. Anschlussvorrichtung (5) nach Anspruch 7 oder 8,
**dadurch gekennzeichnet,**
**dass** der durchströmungswirksame Querschnitt des Kontrollkanals kleiner ist als der des Injektionskanals.

10. Als Abzweig bezeichnete Anschlussanordnung (27) zur Abdichtung eines an ein Hauptrohr (1) anschließenden Seitenrohrs (3),
wobei das Hauptrohr (1) eine Anschlussbohrung (4) aufweist, welche dazu bestimmt ist, eine Anschlussvorrichtung (5) aufzunehmen,
**dadurch gekennzeichnet,**
**dass** die Anschlussvorrichtung (5) nach einem der vorhergehenden Ansprüche ausgestaltet ist,
und **dass** der Abzweig eine Dichtung (11) mit einer umlaufenden, vorderen Dichtlippe (15) aufweist, mittels welcher die Anschlussanordnung (27) in radialer Richtung gegen die Laibung der Anschlussbohrung (4) abgedichtet ist.

11. Abzweig nach Anspruch 10,
**dadurch gekennzeichnet,**
**dass** in der Anschlussbohrung eine Anschlussvorrichtung nach einem Ansprüche 1 bis 9 angeordnet ist.

12. Verfahren zur Abdichtung eines Abzweigs,
bei dem ein Seitenrohr (3) an ein Hauptrohr (1) angeschlossen wird,
wobei eine Anschlussvorrichtung in einer Anschlussbohrung (4) im Hauptrohr (1) angeordnet wird zur Schaffung des Abzweigs,
wobei die Anschlussvorrichtung und die Laibung der Anschlussbohrung (4) einen Aufnahmeraum (16) begrenzen, welcher zur Abdichtung mit einem Dichtmittel (17) gefüllt wird,
**dadurch gekennzeichnet,**
**dass** die Anschlussvorrichtung nach einem der Ansprüche 1 bis 9 ausgestaltet ist,
und eine vordere Dichtlippe (15) aufweist, welche den Aufnahmeraum (16) begrenzt, schaffend einen ersten Teilraum (25),
und **dass** die Anschlussvorrichtung eine hintere Dichtlippe (18) aufweist, welche einer inneren Auskleidung (2) des Hauptrohrs (1) angelegt wird und dazu ausgestaltet ist, die Konturen von Beschädigungen in der Auskleidung (2) im Wesentlichen anzunehmen,
wobei die vordere und die hintere Dichtlippe (15, 18) einen zweiten Teilraum (26) begrenzen,
wobei zunächst der erste Teilraum (25) mit dem Dichtmittel (17) gefüllt wird und dann der zweite Teilraum (26) mit einem Dichtmittel gefüllt wird.

13. Verfahren nach Anspruch 12,
**dadurch gekennzeichnet,**
**dass** das Dichtmittel (17) in den ersten Teilraum (25) injiziert wird bis der erste Teilraum (25) gefüllt ist, schaffend eine erste Abdichtungsebene, und weiteres Dichtmittel (17) in den ersten Teilraum (25) injiziert wird, so dass das weitere Dichtmittel (17) an der vorderen Dichtlippe (15) vorbei in den zweiten Teilraum (26) gepresst wird bis der zweite Teilraum (26) gefüllt ist, schaffend eine zweite Abdichtungsebene.

14. Verfahren nach Anspruch 13,
**dadurch gekennzeichnet,**
**dass** eine Anschlussvorrichtung (5) nach einem der Ansprüche 1 bis 9 verwendet wird.

## Claims

1. Connection device (5) for connecting a main pipe (1), provided with a connection bore (4), to a lateral pipe (3),
• having a first end (19) which is introducible into the main pipe (1) through the connection bore (4),
wherein, in the region of its first end (19), the connection device (5) has a radially outwardly extending collar (7) which is placeable from the inside against the main pipe (1),
• having a second end (20) which is connectable to the lateral pipe (3),
wherein, in the region of its second end (20), the connection device (5) has a connection section (6) which is configured to be connectable to the lateral pipe (3),
• having a main body (8) which is in the form of a pipe section,
• having an elastic seal (11) on the collar (7) that extends from the collar (7) in the direction of the second end (20),
• having a spacer ring (10) which surrounds the main body (8) outside the main pipe (1),
wherein the spacer ring (10) has, facing in the direction of the first end (19), a flange surface (21) extending in an undulating manner and following the outer side of the main pipe (1) and has, facing in the direction of the second end (20), a pressure surface (22) extending transversely to the main body (8),
and wherein the spacer ring (10) is shaped in such a way that, between the spacer ring (10), at one side, and the main body (8) and the main pipe (1), at the other side, a receiving space (16) fillable with a flowable sealant (17) is created, which receiving space is adjacent to the main body (8) and the main pipe (1),
and wherein an outer seal (23) is arranged on the side of the flange surface (21) facing towards the first end (19) and delimits the receiving space (16),
• and having a clamping ring (9),
wherein the clamping ring (9) surrounds the main body (8) and is screwable to the latter and has, facing in the direction of the first end (19), a clamping surface (24) placeable against the pressure surface (22) of the spacer ring (10),
**characterized**
**in that** the seal (11) has an encircling front sealing lip (15) which extends outwards substantially in the radial direction,
and **in that** the front sealing lip (15) delimits the receiving space (16), creating a first part-space (25) which is adjacent to the spacer ring (10),
and **in that** the spacer ring (10) has an injection channel which opens out into the first part-space (25).

2. Connection device (5) according to Claim 1,
**characterized**
**in that** the seal (11) has an axial section (14) along the main body (8),
and **in that** the front sealing lip (15) is arranged in the axial section (14).

3. Connection device (5) according to Claim 1 or 2,
**characterized**
**in that** the seal (11) situated on the collar (7) has a sealing region which is placeable against the lining (2) of the main pipe (1) and which extends in the direction of the second end (20).

4. Connection device (5) according to Claim 3,
**characterized**
**in that** the sealing region is in the form of a rear sealing lip (18).

5. Connection device (5) according to Claim 4,
**characterized**
**in that** the front and rear sealing lips (15, 18) delimit a second part-space (26), wherein filling the first part-space (25) with sealant (17) creates a first sealing plane and filling the second part-space (26) creates a second sealing plane, wherein, by means of the front and rear sealing lips (15, 18), the sealant is guided, in each case circumferentially, around the main body (8).

6. Connection device (5) according to Claim 4 or 5,
**characterized**
**in that** the seal (11) is of substantially C-shaped form.

7. Connection device (5) according to one of the preceding claims,
**characterized**
**in that** the spacer ring (10) has a further control channel which opens out in the receiving space (16).

8. Connection device (5) according to Claim 7,
**characterized**
**in that** the control channel is arranged in the spacer ring (10) so as to be situated opposite the injection channel, and is further away from the second end (20) than the injection channel in the axial direction of the main body (8).

9. Connection device (5) according to Claim 7 or 8,
**characterized**
**in that** the active throughflow cross-section of the control channel is smaller than that of the injection channel.

10. Connection arrangement (27), referred to as a branch, for sealing off a lateral pipe (3) that adjoins a main pipe (1),
wherein the main pipe (1) has a connection bore (4), which is intended to receive a connection device (5), **characterized**
**in that** the connection device (5) is designed according to one of the preceding claims,
and **in that** the branch has a seal (11) with an encircling front sealing lip (15) by means of which the connection arrangement (27) is sealed off with respect to the inner surface of the connection bore (4) in the radial direction.

11. Branch according to Claim 10,
**characterized**
**in that** a connection device according to one of Claims 1 to 9 is arranged in the connection bore.

12. Method for sealing off a branch,
in which a lateral pipe (3) is connected to a main pipe (1),
wherein a connection device is arranged in a connection bore (4) in the main pipe (1) for the purpose of creating the branch,
wherein the connection device and the inner surface of the connection bore (4) delimit a receiving space (16) which, for sealing purposes, is filled with a sealant (17),
**characterized**
**in that** the connection device is designed according to one of Claims 1 to 9,
and has a front sealing lip (15) which delimits the receiving space (16), creating a first part-space (25),
and **in that** the connection device has a rear sealing lip (18) which is placed against an inner lining (2) of the main pipe (1) and which is configured to substantially assume the contours of damage in the lining (2),
wherein the front and rear sealing lips (15, 18) delimit a second part-space (26),
wherein firstly the first part-space (25) is filled with the sealant (17) and then the second part-space (26) is filled with a sealant.

13. Method according to Claim 12,
**characterized**
**in that** the sealant (17) is injected into the first part-space (25) until the first part-space (25) is filled, creating a first sealing plane, and further sealant (17) is injected into the first part-space (25) so that the further sealant (17) is pressed past the front sealing lip (15) into the second part-space (26) until the second part-space (26) is filled, creating a second sealing plane.

14. Method according to Claim 13,
**characterized**
**in that** a connection device (5) according to one of Claims 1 to 9 is used.

## Revendications

1. Dispositif de raccordement (5) pour relier un tube principal (1) pourvu d'un alésage de raccordement (4) à un tube latéral (3),
• avec une première extrémité (19) pouvant être insérée dans le tube principal (1) à travers l'alésage de raccordement (4),
le dispositif de raccordement (5) présentant, dans la zone de sa première extrémité (19), une collerette (7) s'étendant radialement vers l'extérieur, pouvant être appliquée de l'intérieur contre le tube principal (1),
• avec une deuxième extrémité (20) pouvant être raccordée au tube latéral (3),
le dispositif de raccordement (5) présentant, dans la zone de sa deuxième extrémité (20), une section de raccordement (6) qui est conçue de manière à pouvoir être raccordée au tube latéral (3),
• avec un corps de base (8) conçu sous forme de section de tube,
• avec un joint élastique (11) sur la collerette (7), qui s'étend de la collerette (7) en direction de la deuxième extrémité (20),
• avec une bague d'écartement (10) entourant le corps de base (8) à l'extérieur du tube principal (1),
la bague d'écartement (10) présentant, en direction de la première extrémité (19), une surface de bride (21) s'étendant sous forme ondulée, suivant le côté extérieur du tube principal (1), ainsi qu'en direction de la deuxième extrémité (20), une surface de pression (22) s'étendant transversalement au corps de base (8),
et la bague d'écartement (10) étant formée de telle sorte qu'entre la bague d'écartement (10) d'une part et le corps de base (8) ainsi que le tube principal (1) d'autre part, il est créé un espace de réception (16) pouvant être rempli d'un agent d'étanchéité (17) fluide, qui est adjacent au corps de base (8) et au tube principal (1), et un joint d'étanchéité extérieur (23) délimitant l'espace de réception (16) étant agencé sur le côté de la surface de bride (21) orienté vers la première extrémité (19),
• et avec une bague de serrage (9),
la bague de serrage (9) entourant le corps de base (8) et pouvant être vissée avec celui-ci, et qui présente, en direction de la première extrémité (19), une surface de serrage (24) pouvant être appliquée contre la surface de pression (22) de la bague d'écartement (10),
**caractérisé**
**en ce que** le joint d'étanchéité (11) présente une lèvre d'étanchéité avant périphérique (15) qui s'étend essentiellement dans la direction radiale vers l'extérieur,
et **en ce que** la lèvre d'étanchéité avant (15) délimite l'espace de réception (16), créant un premier espace partiel (25) qui est adjacent à la bague d'écartement (10),
et **en ce que** la bague d'écartement (10) présente un canal d'injection qui débouche dans le premier espace partiel (25).

2. Dispositif de raccordement (5) selon la revendication 1,
**caractérisé**
**en ce que** le joint d'étanchéité (11) présente une section axiale (14) le long du corps de base (8),
et **en ce que** la lèvre d'étanchéité avant (15) est agencée dans la section axiale (14).

3. Dispositif de raccordement (5) selon la revendication 1 ou 2,
**caractérisé**
**en ce que** le joint d'étanchéité (11) se trouvant sur la collerette (7) présente une zone d'étanchéité pouvant être appliquée contre le revêtement (2) du tube principal (1), laquelle s'étend en direction de la deuxième extrémité (20).

4. Dispositif de raccordement (5) selon la revendication 3,
**caractérisé**
**en ce que** la zone d'étanchéité est conçue sous forme de lèvre d'étanchéité arrière (18).

5. Dispositif de raccordement (5) selon la revendication 4,
caractérisé
que la lèvre d'étanchéité avant et la lèvre d'étanchéité arrière (15, 18) délimitent un deuxième espace partiel (26), un remplissage avec un agent d'étanchéité (17) du premier espace partiel (25) créant un premier plan d'étanchéité et un remplissage du deuxième espace partiel (26) créant un deuxième plan d'étanchéité, l'agent d'étanchéité étant guidé au moyen de la lèvre d'étanchéité avant et de la lèvre d'étanchéité arrière (15, 18) autour du corps de base (8) respectivement de manière circonférentielle.

6. Dispositif de raccordement (5) selon la revendication 4 ou 5,
**caractérisé**
**en ce que** le joint d'étanchéité (11) est réalisé essentiellement en forme de C.

7. Dispositif de raccordement (5) selon l'une quelconque des revendications précédentes,
**caractérisé**
**en ce que** la bague d'écartement (10) présente un autre canal de contrôle qui débouche dans l'espace de réception (16) .

8. Dispositif de raccordement (5) selon la revendication 7,
**caractérisé**
**en ce que** le canal de contrôle est agencé dans la bague d'écartement (10) en face du canal d'injection et est plus éloigné de la deuxième extrémité (20) dans la direction axiale du corps de base (8) que le canal d'injection.

9. Dispositif de raccordement (5) selon la revendication 7 ou 8,
**caractérisé**
**en ce que** la section transversale efficace pour l'écoulement du canal de contrôle est plus petite que celle du canal d'injection.

10. Agencement de raccordement (27) nommé dérivation pour l'étanchéification d'un tube latéral (3) se raccordant à un tube principal (1),
le tube principal (1) présentant un alésage de raccordement (4) destiné à recevoir un dispositif de raccordement (5),
**caractérisé**
**en ce que** le dispositif de raccordement (5) est conçu selon l'une quelconque des revendications précédentes,
et **en ce que** la dérivation présente un joint d'étanchéité (11) avec une lèvre d'étanchéité avant (15) périphérique, au moyen de laquelle l'agencement de raccordement (27) est étanchéifié dans la direction radiale contre l'embrasure de l'alésage de raccordement (4).

11. Dérivation selon la revendication 10,
**caractérisée**
**en ce qu'**un dispositif de raccordement selon l'une quelconque des revendications 1 à 9 est agencé dans l'alésage de raccordement.

12. Procédé d'étanchéification d'une dérivation,
dans lequel un tube latéral (3) est raccordé à un tube principal (1),
un dispositif de raccordement étant agencé dans un alésage de raccordement (4) dans le tube principal (1) pour créer la dérivation,
le dispositif de raccordement et l'embrasure de l'alésage de raccordement (4) délimitant un espace de réception (16) qui est rempli d'un agent d'étanchéité (17) pour l'étanchéification,
**caractérisé**
**en ce que** le dispositif de raccordement est conçu selon l'une quelconque des revendications 1 à 9,
et présente une lèvre d'étanchéité avant (15) qui délimite l'espace de réception (16), créant un premier espace partiel (25),
et **en ce que** le dispositif de raccordement présente une lèvre d'étanchéité arrière (18) qui est appliquée sur un revêtement intérieur (2) du tube principal (1) et qui est conçue pour prendre essentiellement les contours de dommages dans le revêtement (2),
la lèvre d'étanchéité avant et la lèvre d'étanchéité arrière (15, 18) délimitant un deuxième espace partiel (26),
le premier espace partiel (25) étant d'abord rempli avec l'agent d'étanchéité (17) et le deuxième espace partiel (26) étant ensuite rempli avec un agent d'étanchéité.

13. Procédé selon la revendication 12,
**caractérisé**
**en ce que** l'agent d'étanchéité (17) est injecté dans le premier espace partiel (25) jusqu'à ce que le premier espace partiel (25) soit rempli, créant un premier plan d'étanchéité, et en ce que de l'agent d'étanchéité supplémentaire (17) est injecté dans le premier espace partiel (25), de telle sorte que l'agent d'étanchéité supplémentaire (17) est pressé dans le deuxième espace partiel (26) en passant devant la lèvre d'étanchéité avant (15) jusqu'à ce que le deuxième espace partiel (26) soit rempli, créant un deuxième plan d'étanchéité.

14. Procédé selon la revendication 13,
**caractérisé**
**en ce qu'**un dispositif de raccordement (5) selon l'une quelconque des revendications 1 à 9 est utilisé.
